# EUROPEAN PATENT SPECIFICATION

(11) **EP 1 287 054 B1**
(45) Date of publication and mention of the grant of the patent: **11.07.2007**
(21) Application number: 01935561.9
(22) Date of filing: 16.05.2001
(51) Int. Cl.: C08G 18/32, C08G 18/72, C08G 18/79

(54) **AROMATIC POLYURETHANE POLYOL**
AROMATISCHES POLYURETHAN-POLYOL
POLYOL DE POLYURETHANNE AROMATIQUE

(30) Priority: 18.05.2000 US 573926
(43) Date of publication of application: 05.03.2003
(73) Proprietor: Akzo Nobel Coatings International B.V., 6824 BM Arnhem (NL)
(72) Inventor: YAHKIND, Alexander, Leo, West Bloomfield, MI 48323 (US); ABU-SHANAB, Omar, Lutfi, Auburn Hills, MI 48326 (US); ZNIDERSIC, Kenneth, Mark, Louisville, KY 40223 (US); PRICE, Latoska, Nikita, Southfield, MI 48034 (US); MOOS, Jan, Wilhelm, E., NL-2771 PJ Boskoop (NL)
(74) Representative: Schalkwijk, Pieter Cornelis
(86) International application number: PCT/US2001/015742
(87) International publication number: WO 2001/088012

(56) References cited:
- EP-A- 0 455 291
- US-A- 3 580 881
- US-A- 4 781 986

## Description

### BACKGROUND OF THE INVENTION

The present invention relates to aromatic polyurethane polyols useful in coating compositions, and particularly useful in primers applied to metal substrates. More specifically, the present invention relates to aromatic polyurethane polyols comprising the reaction product of diisocyanates, triisocyanates and diols wherein at least one of the isocyanates is aromatic. The resultant aromatic polyurethane polyols are low molecular weight oligomers (typically number average molecular weight (Mn)< 3000), designed to be part of a coating composition which when cured produces a coating having good mechanical and chemical properties.

These aromatic polyurethane polyols are prepared from a special class of diols (α,β and/or α,γ) in order to provide selectivity, and produce a polyurethane polyol having low molecular weight and relatively low viscosity.

It should be noted that, as used herein, the term "polyurethane polyol" refers to a reaction product wherein the reactants (diol component and polyiisocyanate component(s)) are linked substantially only via urethane linkage. This is in contrast to polyester-urethane and urethane-modified acrylic polyols, in which the reactants are linked via urethane as well as ester linkages.

Currently, the automotive and the car refinish industry are using coating systems comprising primers, basecoats and clearcoats in ever-increasing amounts. In such systems, generally a pigmented coating is applied over appropriate primers and the coating system is completed by applying an unpigmented, clear topcoat over the pigmented basecoat. In some instances, pigmented monocoats are utilized. These coating compositions are generally supplied as "one-pack" or "two-pack" systems. In a typical one-pack system, all of the coating ingredients are combined into one storage stable mixture. Upon application the polyol component is crosslinked, generally with an aminoplast resin (such as a melamine resin) or a blocked isocyanate, under heat cure conditions of 120 °C or above. In a typical two-pack system, the polyol component is combined with a crosslinking agent, generally an isocyanate, shortly before application, with curing being conducted at ambient or elevated temperatures up to 80°C.

To achieve acceptable solution viscosities (20-30 seconds, #4 Ford Cup at about 25 °C) for typical high solids coating systems, it is necessary that the film-forming polymer has a weight average molecular weight (Mw) lower than about 5,000. To achieve good film properties in such systems after crosslinking, it is also necessary that the number average molecular weight (Mn) should exceed about 800, and that each polymer should contain at least two reactive hydroxyl functional groups. These general principles apply to polyester polyols, acrylic polyols, and also to urethane polyols. In primer systems, the following properties are desirable, good adhesion, corrosion resistance, and hardness. The use of urethane polyols (aliphatic) are generally cost prohibitive and seldomly used in the primer systems. Durability of the complete coating system is mostly provided by the topcoats. That's why epoxy primers are often used.

However, epoxies typically have high molecular weights and, thus, high viscosities. As is evident from the above discussion, the requirements for acceptable solution viscosities and good film properties lead to contradictory molecular weight requirements since in low solution viscosities the Molecular weight should be low, but for good film properties the Molecular weight should be high.

Many of the high performance, high solids automotive and car refinish coatings presently in use are based upon polymeric systems comprised of either epoxies (used extensively in primer systems) or polyester-based or polyacrylic-based polyols.

A considerable amount of work has been done related to coatings containing polyurethane polyols. One way to make polyurethane polyols is to react a diisocyanate or a multifunctional isocyanate with a significant stoichiometric excess of a diol. After the reaction is complete, the excess of diol is removed, preferable by distillation. The obvious disadvantage of this method of making low molecular weight polyurethane polyols is that the distillation of the diols is inconvenient, not practical and cost prohibitive. U.S. Patents describing the production of polyurethane polyols by using stoichiometric excess of diols include: U.S. Patent 4,543,405 to Ambrose, et al.; issued September 24, 1985; and U.S. Patent 4,288,577 to McShane, Jr., issued September 8, 1981.

U.S. Patent No. 5,155,201 discloses polyurethane polyols comprising reaction products of n-functional polyisocyanates (n=2-5) and substantially monomeric diols having hydroxyl groups separated by 3 carbon atoms or less.

U.S. Patent No. 5,175,227 discloses acid etch resistant coating compositions comprising polyurethane polyols and hydroxyl group-reactive crosslinkers. The polyurethane polyols comprise reaction products of substantially monomeric asymmetric diols with hydroxyl groups separated by 3 carbon atoms or less and n-functional polyisocyanates (n=2-5).

Additionally, U.S. Patent No. 5,130,405 discloses acid etch resistant coatings comprising (1) polyurethane polyols prepared from symmetric 1, 3-diol components and polyisocyanates and (2) hydroxyl group-reactive crosslinking agents.
WO 96/40813 discloses a film forming polyurethane polyol composition prepared from an *n*-functional isocyanate with at least one diol or triol or mixtures thereof and a compound containing isocyanate-reactive functional groups preferably a mono functional alcohol or thiol and a method of preparing such polyurethane polyols.

In a number of the above described patents the polyurethane polyols are prepared from α,β and/or α,γ diols and polyisocyanates. However, it has been established that polyurethane polyols prepared from α,β and/or α,γ diols and aromatic triisocyanates alone have extremely high viscosities and cannot be used in low VOC coating compositions because high viscosity will result in high VOC.

It would, therefore, be advantageous to provide an economical polyol suitable for use in high solids coatings, which not only possesses a desirable spectrum of properties but also is quite convenient to prepare. It has now been discovered that polyurethane polyols prepared from α,β and/or α,γ diols and blends of triisocyanates with diisocyanates where at least one of the isocyanates is aromatic do not have the above mentioned drawbacks.

Primers made from these polyurethane polyols exhibit enhanced performance. They have unexpectedly demonstrated fast ambient cure, improved hardness, excellent solvent resistance and excellent adhesion to the substrate, even metal substrates, compared to the conventional primers typically used in the industry.

### SUMMARY OF THE INVENTION

In accordance with the present invention, there is provided a particularly advantageous aromatic polyurethane polyol suitable for use in high solids coating compositions, which, in its overall concept is a polyurethane polyol comprising the reaction product of
(A) at least one diol component selected from the group consisting of α,β diols, α,γ diols and mixtures thereof,
(B) at least one triisocyanate, and
(C) at least one diisocyanate
where at least one of the isocyanates is aromatic and
wherein the polyurethane polyol has a molecular weight (Mn) less than about 3,000.

### DETAILED DESCRIPTION OF THE INVENTION

The aromatic polyurethane polyol composition of the present invention can be synthesized using either aromatic or aliphatic diisocyanates. Examples of such diisocyanates include but are not limited to toluene diisocyanate (TDI) available for example as MONDUR TD or MONDUR TDS from Bayer; 1,6-hexamethylenediisocyanate (HDI), available for example, as DESMODUR H from Bayer; isophorone diisocyanate (IPDI), available for example from Creanova; tetramethyl xylylene diisocyanate (TMXDI), available for example from Cytek; 2,2,4-trimethyl-1,6-hexamethylene diisocyanate available from Creanova; diphenyl methane diisocyanate available for example as MONDUR M or MONDUR ML, from Bayer; methylene (bis 4-cyclohexyl isocyanate) available for example, as Desmodur W from Bayer; and the biurets and uretdiones of these diisocyanates.

The triisocyanates which may be used for the aromatic polyurethane polyol of the present invention include both aromatic and aliphatic triisocyanates. Examples of such triisocyanates include but are not limited to, the isocyanurate of TDI available for example as Desmodur IL from Bayer; the adduct of trimethylol propane (TMP) and TDI, available for example, as Desmodur CB-72 from Bayer; Isocyanurate of HDI, available for example as Desmodur N-3300 from Bayer; Isocyanurate of IPDI available for example as Desmodur Z4470S from Bayer.

Examples of α,β and/or α,γ diols which may be used in the aromatic polyurethane polyol of the present invention include but are not limited to 2-butyl-2-ethyl-1,3-propane diol (BEPD) available for example from NESTE Chemicals; 2-ethyl-1,3-hexane diol (EHDO) available for example from Dixie Chemicals; 1,2-propane diol available for example from Eastman Chemicals; 1,3-butanediol available for example from Aldrich; 2,2,4-trimethyl-1,3-pentanediol, available for example from Neste Corporation; 1,2-hexanediol available for example from Aldrich; 1,2-octanediol available for example from Aldrich; 1,2-decanediol available for example from Aldrich; and 2,2-dimethyl 1,3-propanediol available as NPG from Eastman Chemicals.

Preferred diols include those having from 2 to 18 carbon atoms and more preferably 2 to 10 carbon atoms.

Also, as demonstrated in the Examples below, the use of α,β diols and/or α,γ diols provides lower viscosity at higher solid content than other diols such as 1,4-diol, 1,5-diol, or 1,6-diol. They (α,β diols and/or a,y diols) have lower molecular weight values, especially with respect to Mw thus providing lower polydispersity values.

The more preferred aromatic polyurethane-polyols of the present invention have a number average molecular weight (Mn) ranging from about 800 to about 2,000, with the ratio of weight average molecular weight (Mw) to number average molecular weight (i.e. degree of dispersion) ranging from about 1.1 to about 2, and the OH values are from about 165 to about 240 mg KOH/g.

The components of the present invention may optionally be reacted in the presence of a polyurethane catalyst. Suitable polyurethane catalysts are conventional and may be utilized in conventional amounts. The particular catalyst choice will be determined based upon a number of factors such as the particular components used and the reaction conditions. These and other factors are well-known to those skilled in the art, who can make the proper choices accordingly. Some of the preferred catalysts include tin and tertiary amine containing compounds, such as organometallic tin compounds and tertiary alkylamines.

Various types of crosslinkers which can be used include but are not limited to isocyanates, blocked isocyanates, and/or melamines and/or other crosslinkers which are reactive toward the hydroxyl groups of polyurethane polyols.

The coating composition of the present invention may also include from about 1 to about 50 weight percent of a resin (binders) such as acrylics, polyesters, alkyds, phenolics, epoxies, polyethers, polyurethanes, and mixtures thereof. The coating compositions described herein can be used for primers, basecoats, topcoats, and clearcoats but are preferred as primers.

Optionally pigments may be present in the coating composition of the present invention. Useful pigments are various types common to the art which include but are not limited to titanium dioxide, graphite, carbon black, zinc oxide, calcium sulphide, chromium oxide, zinc sulphide, zinc chromate, strontium chromate, barium chromate, lead chromate, lead cyanamide, lead silico chromate, yellow nickel titanium, yellow chromium titanium, red iron oxide, yellow iron oxide, black iron oxide, naphtol red and browns, anthraquinones, dioxa zinc violet, isoindoline yellow, arylide yellow and oranges, ultramarine-blue, phthalocyanine complexes, amaranth, quinacridones, halogenated thioindigo pigments, extender pigments such as magnesium silicate, aluminium silicate, calcium silicate, calcium carbonate, fumed silica, barium sulfate, and zinc phosphate.

The coating compositions of the present invention may also comprise additional components such as solvents, catalysts, stabilizers, fillers, rheology control agents, flow additives, leveling additives, dispersing agents and other components known to persons skilled in the art.
The present invention also relates to a coating composition comprising the aromatic polyurethane polyol of the present invention and a crosslinker.

The coating compositions of this aromatic polyurethane polyol of the present invention may be applied to any number of well known substrates by any of a number of conventional application methods. One preferred substrate is metals. The compositions are particularly suitable in the refinish industry, in particular the body shop, to repair automobiles and transportation vehicles, and in finishing large transportation vehicles such as trains, trucks, buses and aeroplanes. Curing of the coatings may be conducted under a variety of conditions known to a person skilled in the art, although curing of the above-described two-component systems is preferably carried out under ambient temperature conditions, typically from ambient to about 60° C.

The compositions are particularly suitable in the refinish industry, in particular the body shop, to repair automobiles and transportation vehicles, and in finishing large transportation vehicles such as trains, trucks, buses and aeroplanes.
The preferred application of the present invention is as a car refinish primer.
The foregoing general discussion of the present invention will be further illustrated by the following specific but nonlimiting examples.

### METHODS

In the Examples set forth below, the Brookfield viscosity was measured at 25° C, spindle# 4, and 20 RPM. Film Formation was tested according to ASTM D 1640-95, Standard Test Methods for Drying, Curing, or Film Formation of Organic Coatings at Room Temperature. Adhesion and Hardness were tested after Water Immersion for 24 h using ASTM D 870-92, Standard Test Methods for Testing of Water resistance of Coatings Using Water Immersion. Adhesion was tested according to ASTM D 3359-95, Standard Test Methods for Measuring Adhesion by Tape Test. Hardness was tested according to ASTM D 4366-95, Standard Test Methods for Hardness of Organic Coatings by Pendulum Damping Tests, test method B - Persoz Pendulum Hardness Test.

### Examples

### Synthesis of Aromatic Polyurethane Polyol

### Example 1

In to a 5 liter, 3 neck round bottom flask equipped with a stirrer, condensor, heating mantle, thermocouple with thermowatch, nitrogen and addition inlets were charged the following: 233.1 g of 2-heptanone, 1057.7 g 2-butyl-2-ethyl-1,3-propanediol, and
2.2 g of dibutyltin dilaurate (10% solution in butyl acetate). The mixture was heated to 70° C. under a nitrogen blanket.

When the temperature reached and stabilized at 70° C, the following mixture was added supersurface to the flask over 180 minutes: 600.0 g of 2-heptanone, 1082.4 g of Desmodur CB-72 [the tri-functional isocyanate adduct of toluene diisocyanate (TDI) and trimethylolpropane (TMP) (equivalent weight at 72% NV = 328 grams/equivalent)], and 293.24 g of 2,4-toluene diisocyanate (equivalent weight at 96% NV = 90.71 grams/equivalent). During the addition of this mixture, the reaction temperature was kept around 70° C. After completion of the addition, the reaction temperature was held at 70° C for two additional hours at which point, it was determine by Fourier Transform Infared Spectroscopy-FTIR that no residual isocyanate remained.

The resulting solution of aromatic polyurethane polyol had a non-volatile content of 65.4%, Brookfield viscosity of 3,680 cps (25° C, spindle# 4, and 20 RPM), and hydroxyl number of 174.0 (mg KOH/g).
The molecular weights of the polymer was measured using Waters' Associates gel permeation chromotography (GPC) and Phenomenex polystyrene standards. The polyurethane polyol had an Mn of 1,109, Mw of 1,594, and degree of dispersion, D of 1.43.

### Example 2-9

Polyurethane polyols, examples 2-9 were produced in a similar manner to polyurethane polyol in example 1, from the components as set forth in Table I.

**Table 1**

| **Reactants** | **Amounts (grams) in each polyurethane polyol resin Example #** | | | | | | | |
|---|---|---|---|---|---|---|---|---|
| | **2** | **3** | **4** | **5** | **6** | **7** | **8** | **9** |
| Methyl Amyl Ketone | 150.0 | 150.0 | 150.0 | 150.0 | 150.0 | 150.0 | 150.0 | 150.0 |
| Dibutyltin dilaurate (10% solution) | 1.0 | 1.0 | 1.0 | 1.0 | 1.0 | 1.0 | 1.0 | 1.0 |
| 2-Butyl-2-Ethyl-1,3-Propanediol (BEPD, α,γ-diol) | 406.8 | | | | | | | 406.8 |
| 1,6-Hexanediol (HDO) | | 300 | | | | | 300.0 | |
| 1,4-Butanediol (BuDO) | | | 231.1 | | | | | |
| 2-ethyl-1,3-Hexanediol (EHDO, α,γ-diol) | | | | 370.0 | | | | |
| 1,2-Propanediol (PrDO, α,β-diol) | | | | | 195.1 | | | |
| 1,5-Pentanediol (PDO) | | | | | | 275.2 | | |
| Isophorone diisocyanate (IPDI) | 141.0 | 141.0 | 141.0 | | | | | |
| toluene diisocyanate (TDI) | | | | 114.8 | 115.1 | 115.1 | 115.1 | 115.1 |
| Desmodur CB-72N | 416.3 | 416.3 | 416.3 | 415.0 | 416.3 | 416.3 | 416.3 | |
| Desmodur N-3300 | | | | | | | | 246.2 |
| Methyl Amyl Ketone | 188.8 | 131.4 | 90.7 | 147.8 | 51.0 | 80.0 | 110.3 | 255.7 |

| | | | | | | | | |
|---|---|---|---|---|---|---|---|---|
| *Desmodur N-3300: Tri-functional isocyanate based on Hexamethylene diisocyanate (HDI) (equivalent weight at 100% NV = 194 grams/equivalent). *IPDI: Isophorone diisocyanate (equivalent weight at 100% NV = 111.1 grams/equivalent). | | | | | | | | |

Examples 3, 4, 7, and 8 are comparative.

The Properties of the resulting polyurethyane polyols of examples 2-9 are reported below in Table II. This table also compares the characterization results of aromatic polyurethane polyols prepared from α,β diols or α,γ diols versus other types of Diols.

**Table 2**

| **Property** | **Polyurethane Polyol Example #** | | | | | | | |
|---|---|---|---|---|---|---|---|---|
| | **2** | **3** | **4** | **5** | **6** | **7** | **8** | **9** |
| Type of Diol | α,γ | 1,6 | 1,4 | α,γ | α,β | 1,5 | 1,6 | α,γ |
| Non-Volatile % | 64.42 | 61.65 | 63.73 | 65.12 | 65.0 | 62.5 | 62.7 | 65.5 |
| Brookfield viscosity (cps) | 4,750 | 8,260 | SOLID | 3,920 | 4,800 | 12,800 | 10,10 0 | 800 |
| OH number (mg KOH/g) | 168 | 192.5 | 212.7 | 182.1 | 236.0 | 211.3 | 200.5 | 186.5 |
| Mn | 1,440 | 2,252 | 1,950 | 1,204 | 909 | 1,850 | 2,127 | 1,112 |
| Mw | 2,672 | 6,797 | 5,476 | 1,926 | 1,360 | 5,327 | 7,016 | 1,905 |
| Degree of Dispersion (Mn/Mw) | 1.9 | 3.0 | 2.8 | 1.6 | 1.5 | 2.9 | 3.3 | 1.7 |

### PERFORMANCE EXAMPLES

The primer formulations examples described below were formulated according to the following weight percentage ratios: Aromatic polyurethane polyol 2.2%; polyester modified acrylic resin 20.5%; Dispersing agent 0.7%; antisettling agent 1.1 %; Conventional solvents 15.5%; Calcium Carbonate 21 %; Talc 8.5%; Zinc phosphate 10%; TiO2 20%; and thixotropic agent 0.5%.

### Example 10

The original primer was based on a binder system composed of a 90/10 blend of a commercially available polyester modified acrylic (Setalux 2152 available from Akzo Nobel Resins inc.)/polyester. This primer composition also contained two catalysts. (A 10% solution of tri-ethylene diamine in isopropyl alcohol and 18% zirconium in mineral spirits At 0.9 and 0.3 weight percent, respectively). To evaluate the aromatic polyurethane polyol, the polyester in this blend was replaced with the aromatic polyurethane polyol of EXAMPLE 1. No additional catalysts were added to the system (dibutyltin dilaurate is a catalyst added with Hardener one). The fully formulated paint was activated, separately, with two different hardeners; Hardener one contained a hexamethylene diisocyanate (HDI) based polyisocyanate (a biuret) at 40 weight percent solids in butyl acetate with 0.005 weight percent of a 10% solution of dibutyltin dilaurate in an ester/aromatic solvent blend; and Hardener two containing a 60/40 blend of an HDI based/IPDI based polyisocyanate (isocyanurate) at 69 weight percent solids at a NCO:OH ratio of 1.05. Each sample was reduced with a ketone based solvent blend to achieve a ready to spray VOC of 4.79 lbs/gal (575 g/l).

**Table 3**

| **Dry times/Potlife** | | | | | |
|---|---|---|---|---|---|
| | Drytimes | | | Potlife (#4 Ford) | |
| | Dust Free | Tack Free | Film Build | Initial | 1 Hour |
| EXAMPLE 1 / Hardener One | 19 min. | 26 min. | 1.21 | 15.4 sec. | 17.2 sec. |
| EXAMPLE 1 / Hardener Two | 24 min. | 34 min. | 1.41 | 15.6 sec. | 16.1 sec. |
| Control/ Hardener one | 20 min. | 27 min. | 1.17 | 15.0 sec. | 17.7 sec. |

### Example 11

Aromatic polyurethane polyols EXAMPLE 2 (1.0 eq BEPD/0.25 eq Desmodur CB-72N/0.25 eq IPDI) and EXAMPLE 1 (1.0 eq BEPD/0.25 eq Desmodur CB-72N/0.25 eq TDI) were substituted in the original primer formula as a replacement for the polyester on a % solids basis (10% as above). Non-sanding primer applications were crosslinked at 105% using Hardener one and reduced to 4.65 lbs/gal (558g/l) VOC using a ketone solvent blend. Sanding primer applications were crosslinked at 105% using Hardener three, a blend of two solvent free aliphatic HDI based polyisocyanates reduced to 42% weight solids with a conventional solvent blend, and reduced to 4.2 lb/gal (504 g/l) VOC using ketone sovent based reducer. Panels were topcoated with basecoat/clearcoat formulation then heat aged for 4 hours at 60°C.

Each system was evaluated for adhesion and hardness on cold rolled steel (CRS) that had been treated with proprietary commercially available washprimer (Washprimer EMCF from Akzo Nobel Coatings Inc.) in a simple ambient temperature water immersion test.

**Table 4**

| **Water Immersion** | | | | | | | | | | | | |
|---|---|---|---|---|---|---|---|---|---|---|---|---|
| | Adhesion (Avg./Std.Dev.) | | | | | | Persoz Hardness (Avg./Std.Dev.) | | | | | |
| | Initial | Day 1 | Day 3 | Day 7 | Day 14 | Recov. | Initial | Day 1 | Day 3 | Day 7 | Day 14 | Recov. |
| **Non-sanding** | | | | | | | | | | | | |
| | | | | | | | | | | | | |
| Original Primer formulation | 9/0 | 6/0 | 7/1 | 4/3 | 6/2 | 9/0 | 151/3 | 104/2 | 104/6 | 89/11 | 100/1 | 186/7 |
| EXAMPLE 2 | 9/1 | 9/1 | 9/1 | 8/0 | 9/1 | 9/1 | 156/7 | 109/5 | 110/2 | 96/1 | 104/7 | 188/6 |
| EXAMPLE 1 | 9/0 | 9/0 | 9/1 | 9/0 | 9/0 | 9/1 | 165/1 | 122/9 | 122/0 | 108/0 | 112/6 | 196/4 |

| **Sanding** | | | | | | | | | | | | |
|---|---|---|---|---|---|---|---|---|---|---|---|---|
| Original Primer formulation | 10/0 | 9/1 | 9/1 | 5/1 | 5/1 | 9/0 | 58/6 | 39/1 | 37/0 | 33/1 | 35/1 | 80/1 |
| EXAMPLE 2 | 9/1 | 9/1 | 9/1 | 8/0 | 9/0 | 9/0 | 104/1 | 58/3 | 56/0 | 49/1 | 54/2 | 134/3 |
| EXAMPLE 1 | 9/0 | 9/0 | 9/1 | 9/0 | 9/0 | 9/0 | 114/4 | 66/1 | 68/1 | 56/1 | 62/4 | 162/6 |

### Example 12

Two formulas, containing aromatic polyurethane polyols EXAMPLE 2 and EXAMPLE 1, were evaluated in the original primer formulation as a replacement to the polyester (10% as above). In addition, the first formula contained Wollastocoat 10ES and the second contained Wollastocoat 10AS. Non-sanding applications were activated 100 parts paint/50 parts Hardener 1 and 30 parts ketone solvent blend by volume. Sanding application were activated 3-part paing/1part hardener 3 + 10% ketone solvent blend by volume.

Cold rolled steel panels were treated with a commercially available washprimer (Washprimer EMCF from Akzo Nobel Coatings Inc.), then topcoated with a basecoat/clearcoat. Panels were heat aged 4 hours at 60°C.

**Table 5**

| **Water Immersion** | | | | | | | | | | |
|---|---|---|---|---|---|---|---|---|---|---|
| | Adhesion (Avg./Std.Dev.) | | | | | Persoz Hardness (Avg./Std.Dev.) | | | | |
| | Initial | Day 3 | Day7 | Day14 | Recov. | Initial | Day3 | Day7 | Day14 | Recov |
| **Sanding** | | | | | | | | | | |
| Original Primer w/ (Wollastocoat 10ES) | 9/1 | 9/1 | 10/0 | 9/0 | 10/0 | 159/1 | 53/1 | 56/1 | 54/1 | 115/7 |
| Wollastocoat 10AS/EXAMPLE 2 | 9/0 | 9/0 | 9/1 | 9/0 | 9/1 | 232/8 | 91/6 | 105/10 | 100/3 | 212/3 |
| Wollastocoat 10AS/EXAMPLE 1 | 9/1 | 9/0 | 9/1 | 9/1 | 9/1 | 227/5 | 77/1 | 92/1 | 95/4 | 195/7 |
| Wollastocoat 10ES/EXAMPLE 2 | 9/1 | 9/1 | 9/1 | 9/0 | 10/0 | 211/5 | 75/4 | 86/6 | 88/4 | 182/17 |
| Wollastocoat 10ES/EXAMPLE 1 | 10/0 | 9/1 | 6/6 | 5/6 | 10/0 | 217/9 | 71/7 | 83/8 | 86/8 | 174/13 |

| **Non-sanding** | | | | | | | | | | |
|---|---|---|---|---|---|---|---|---|---|---|
| Control (Wollastocoat 10ES) | 9/0 | 8/0 | 8/0 | 8/0 | 9/1 | 262/6 | 133/1 | 138/2 | 134/1 | 255/6 |
| Wollastocoat 10AS/EXAMPLE 2 | 9/0 | 9/1 | 9/0 | 9/0 | 9/0 | 263/13 | 199/1 | 214/1 | 179/54 | 274/6 |
| Wollastocoat 10AS/EXAMPLE 1 | 9/0 | 9/0 | 9/1 | 9/0 | 9/0 | 291/1 | 199/4 | 205/4 | 215/13 | 277/4 |
| Wollastocoat 10ES/EXAMPLE 2 | 9/0 | 9/0 | 9/1 | 9/1 | 9/0 | 261/6 | 169/4 | 177/4 | 160/25 | 264/6 |
| Wollastocoat 10ES/EXAMPLE 1 | 9/0 | 9/0 | 9/0 | 9/0 | 9/1 | 261/9 | 187/7 | 194/1 | 200/5 | 267/10 |

| | | | | | | | | | | |
|---|---|---|---|---|---|---|---|---|---|---|
| Wollastocoat ES: epoxy silane treated calcium metasilicate. Wollastocoat AS: amino silane treated calcium metasilicate. | | | | | | | | | | |

## Claims

1. A polyurethane polyol comprising the reaction product of
(a) at least one diol component selected from the group consisting of α,β diols, α,γ diols and mixtures thereof,
(b) at least one triisocyanate, and
(c) at least one diisocyanate
wherein at least one of the isocyanates is aromatic and
wherein the polyurethane polyol has a molecular weight Mn less than about 3,000.

2. The polyurethane polyol of claim 1 wherein the α,β and/or, α,γ diols are selected from the group consisting of 2-butyl-2-ethyl-1,3-propane diol, 2-ethyl-1,3-hexane diol, 1,2-propane diol, 1,3-butanediol, 2,2,4-trimethyl-1,3-pentanediol, 1,2-hexanediol, 1,2-octanediol, 1,2-decanediol, and 2,2-dimethyl 1,3-propanediol.

3. The polyurethane polyol of claim 1 wherein the triisocyanate is selected from the group consisting of the isocyanurate of toluene diisocyanate, the adduct of trimethylol propane and toluene diiscyanate, the isocyanurate of hexamethylene diisocyanate, and the isocyanurate of isophorone diisocyanate.

4. The polyurethane polyol of claim 1 wherein the diisocyanate is selected from the group consisting of toluene diisocyanate, 1,6-hexamethylenediisocyanate, isophorone diisocyanate, tetramethyl xylylene diisocyanate, 2,2,4-trimethyl-1,6-hexamethylene diisocyanate, diphenyl methane diisocyanate, methylene (bis 4-cyclohexyl isocyanate), and the biurets and uretdiones of these diisocyanates.

5. A coating composition comprising the polyurethane polyol of claim 1 and a crosslinker.

6. A coating composition according to claim 5 wherein the crosslinker is selected from the group consisting of isocyanates, blocked isocyanates and melamines.

7. A coating composition according to claim 5 wherein the crosslinker is reactive towards the hydroxyl groups of the polyurethane polyol.

8. A coating composition according to claim 5 further comprising a resin.

9. A coating composition according to claim 8 wherein the resin is selected from the group consisting of acrylics, polyesters, alkyds, phenolics, epoxies, polyethers, polyurethanes, and mixtures thereof.

10. A method of coating a substrate comprising applying a coating composition according to claim 5 to a substrate.

11. A method of coating a substrate comprising applying a coating composition according to claim 8 to a substrate.

12. A method of refinishing a car, the method comprising applying a coating composition according to any on of the preceding claims 5 to 9.

## Patentansprüche

1. Polyurethanpolyol, umfassend das Produkt der Reaktion von
(a) wenigstens einer Diolkomponente, die aus der Gruppe bestehend aus α,β-Diolen, α,γ-Diolen und Mischungen davon ausgewählt ist,
(b) wenigstens einem Triisocyanat und
(c) wenigstens einem Diisocyanat,
wobei wenigstens eines der Isocyanate aromatisch ist und wobei das Polyurethanpolyol eine Molmasse Mn von weniger als etwa 3000 hat.

2. Polyurethanpolyol nach Anspruch 1, wobei die α,β- und/oder α,γ-Diole aus der aus 2-Butyl-2-ethyl-1,3-propandiol, 2-Ethyl-1,3-hexandiol, 1,2-Propandiol, 1,3-Butandiol, 2,2,4-Trimethyl-1,3-pentandiol, 1,2-Hexandiol, 1,2-Octandiol, 1,2-Decandiol und 2,2-Dimethyl-1,3-propandiol bestehenden Gruppe ausgewählt sind.

3. Polyurethanpolyol nach Anspruch 1, wobei das Triisocyanat aus der aus dem Isocyanurat von Toluoldiisocyanat, dem Addukt von Trimethylolpropan und Toluoldiisocyanat, dem Isocyanurat von Hexamethylendiisocyanat und dem Isocyanurat von Isophorondiisocyanat bestehenden Gruppe ausgewählt ist.

4. Polyurethanpolyol nach Anspruch 1, wobei das Diisocyanat aus der aus Toluoldiisocyanat, 1,6-Hexamethylendiisocyanat, Isophorondiisocyanat, Tetramethylxylylendiisocyanat, 2,2,4-Trimethyl-1,6-hexamethylendiisocyanat, Diphenylmethandiisocyanat, Methylen(bis-4-cyclohexylisocyanat) und den Biurets und Uretdionen dieser Diisocyanate bestehenden Gruppe ausgewählt ist.

5. Beschichtungszusammensetzung, umfassend das Polyurethanpolyol nach Anspruch 1 und ein Vernetzungsmittel.

6. Beschichtungszusammensetzung nach Anspruch 5, wobei das Vernetzungsmittel aus der aus Isocyanaten, blockierten Isocyanaten und Melaminen bestehenden Gruppe ausgewählt ist.

7. Beschichtungszusammensetzung nach Anspruch 5, wobei das Vernetzungsmittel gegenüber den Hydroxylgruppen des Polyurethanpolyols reaktiv ist.

8. Beschichtungszusammensetzung nach Anspruch 5, die weiterhin ein Harz umfasst.

9. Beschichtungszusammensetzung nach Anspruch 8, wobei das Harz ausgewählt ist aus der Gruppe bestehend aus Acrylen, Polyestern, Alkyden, Phenolen, Epoxyharzen, Polyethern, Polyurethanen und Mischungen davon.

10. Verfahren zur Beschichtung eines Substrats, umfassend das Auftragen einer Beschichtungszusammensetzung nach Anspruch 5 auf ein Substrat.

11. Verfahren zur Beschichtung eines Substrats, umfassend das Auftragen einer Beschichtungszusammensetzung nach Anspruch 8 auf ein Substrat.

12. Verfahren zur Reparaturlackierung eines Automobils, umfassend das Auftragen einer Beschichtungszusammensetzung nach einem der vorhergehenden Ansprüche 5 bis 9.

## Revendications

1. Polyol de polyuréthane comprenant le produit réactionnel de
(a) au moins un composant diol choisi dans le groupe constitué par les α,β-diols, les α,γ-diols et des mélanges de ceux-ci,
(b) au moins un triisocyanate, et
(c) au moins un diisocyanate,
dans lequel au moins un des isocyanates est aromatique et dans lequel le polyol de polyuréthane a une masse moléculaire Mn inférieure à environ 3000.

2. Polyol de polyuréthane selon la revendication 1, dans lequel les α,β- et/ou α,γ-diols sont choisis dans le groupe constitué par le 2-butyl-2-éthyl-1,3-propanediol, le 2-éthyl-1,3-hexanediol, le 1,2-propanediol, le 1,3-butanediol, le 2,2,4-triméthyl-1,3-pentanediol, le 1,2-hexanediol, le 1,2-octanediol, le 1,2-décanediol, et le 2,2-diméthyl-1,3-propanediol.

3. Polyol de polyuréthane selon la revendication 1, dans lequel le triisocyanate est choisi dans le groupe constitué de l'isocyanurate de diisocyanate de toluène, l'adduit de triméthylolpropane et de diisocyanate de toluène, l'isocyanurate de diisocyanate d'hexaméthylène, et l'isocyanurate de diisocyanate d'isophorone.

4. Polyol de polyuréthane selon la revendication 1, dans lequel le diisocyanate est choisi dans le groupe constitué par le diisocyanate de toluène, le diisocyanate de 1,6-hexaméthylène, le diisocyanate d'isophorone, le diisocyanate de tétraméthylxylylène, le diisocyanate de 2,2,4-triméthyl-1,6-hexaméthylène, le diisocyanate de diphénylméthane, le méthylène (isocyanate de bis-4-cyclohexyle) et les biurets et les uretdiones de ces diisocyanates.

5. Composition de revêtement comprenant le polyol de polyuréthane selon la revendication 1 et un agent de réticulation.

6. Composition de revêtement selon la revendication 5, dans laquelle l'agent de réticulation est choisi dans le groupe constitué par les isocyanates, les isocyanates séquencés et les mélamines.

7. Composition de revêtement selon la revendication 5, dans laquelle l'agent de réticulation est réactif vis-à-vis des groupes hydroxyles du polyol de polyuréthane.

8. Composition de revêtement selon la revendication 5, comprenant en outre une résine.

9. Composition de revêtement selon la revendication 8, dans laquelle la résine est choisie dans le groupe constitué par les composés acryliques, les polyesters, les alkydes, les composés phénoliques, les époxy, les polyéthers, les polyuréthanes, et des mélanges de ceux-ci.

10. Procédé de revêtement d'un substrat comprenant l'application d'une composition de revêtement selon la revendication 5 à un substrat.

11. Procédé de revêtement d'un substrat comprenant l'application d'une composition de revêtement selon la revendication 8 à un substrat.

12. Procédé de revernissage d'une voiture, ledit procédé comprenant l'application d'une composition de revêtement selon l'une quelconque des revendications 5 à 9 précédentes.
